# EUROPEAN PATENT APPLICATION

(11) **EP 4 815 287 A2**
(43) Date of publication of application: **30.09.2026**
(21) Application number: 26163559.3
(22) Date of filing: 10.03.2026
(51) Int. Cl.: H02M 3/158

(54) **DIGITALLY ADAPTIVE RECONFIGURABLE SWITCHING REGULATOR**

(30) Priority: 28.03.2025 US 202519094024
(71) Applicant: Avago Technologies International Sales Pte. Limited, Singapore 768923 (SG)
(72) Inventor: Mundlapudi, Sraavan Reddy, San Diego, CA, 92127 (US); Ding, Wei, 141090 Singapore (SG)
(74) Representative: Grünecker Patent- und Rechtsanwälte PartG mbB

(57) **Abstract**

An example switching regulator includes: a first switch including a first terminal coupled to a first node, a second terminal coupled to a second node, and a third terminal coupled to a third node, the first node configured to supply a first voltage, the second node configured to supply an electrical ground; a first network coupled between the third node and the second node, the first network including a fourth node configured to supply a second voltage; a comparator having an input configured to receive a third voltage and a fourth voltage and an output coupled to control the first switch, the fourth voltage being proportional to the second voltage; and a digital circuit coupled to the comparator and the third node, the digital circuit configured to: measure a frequency of a fifth voltage at the third node; and adjust a hysteresis range of the comparator based on the frequency.

## Description

### BACKGROUND

A voltage regulator may be a circuit designed to use an input voltage to supply an output voltage to a load circuit. Voltage regulation may be the ability of the voltage regulator to provide a near constant output voltage over a range of current drawn from the regulator by the load circuit. A linear regulator may be a voltage regulator that can vary its resistance between input and output continuously to maintain a near constant output voltage while supplying current to the load circuit. In contrast to a linear regulator, a switching regulator may be a voltage regulator that rapidly switches the input voltage on and off to maintain a near constant output voltage while supplying current to the load circuit. A buck converter may be a switching regulator that reduces (steps down) a higher direct current (DC) input voltage to a lower DC output voltage. A DC voltage may be a voltage that drives current in one direction. A buck converter may also be referred to as a step-down converter. A buck converter may be a type of DC-to-DC converter, which may be a circuit that converts a source of DC voltage from one level to another.

A device can include a buck converter coupled to a load circuit. Such devices can include computers, computer peripherals, battery chargers, and wireless devices to name a few. The current drawn from the buck converter by the load circuit ("load current") can vary over time. A sudden transition in the load current from a lower current to a higher current can cause a transient disturbance in the voltage output from the buck converter. In some devices, the buck converter can operate with a low difference between input and output voltages (such a difference being referred to as voltage headroom). With low voltage headroom, transient disturbances in the output voltage of a buck converter can impact its device's performance. The transient disturbances can affect the ability of the device to operate with low supply voltages and increase the device's power consumption.

### SUMMARY

In one embodiment, a switching regulator can include a first switch, a first network, a comparator, and a digital circuit. The first switch can include a first terminal coupled to a first node, a second terminal coupled to a second node, and a third terminal coupled to a third node. The first node can be configured to supply a first voltage, and the second node can be configured to supply an electrical ground. The first network can be coupled between the third node and the second node. The first network can include a fourth node configured to supply a second voltage. The comparator can include an input configured to receive a third voltage and a fourth voltage and an output coupled to control the first switch. The fourth voltage can be proportional to the second voltage. The digital circuit can be coupled to the comparator and the third node. The digital circuit can be configured to measure a frequency of a fifth voltage at the third node and adjust hysteresis thresholds of the comparator based on the frequency.

In another embodiment, a switching regulator can include a first switch, a first network, a comparator, and a digital circuit. The first switch can include a first terminal coupled to a first node, a second terminal coupled to a second node, and a third terminal coupled to a third node. The first node can be configured to supply a first voltage, and the second node can be configured to supply an electrical ground. The first network can be coupled between the third node and the second node. The first network can include a fourth node configured to supply a second voltage. The comparator can include an input configured to receive a third voltage and a fourth voltage and an output coupled to control the first switch. The fourth voltage can be proportional to the second voltage. The digital circuit can be coupled to the comparator and the third node. The digital circuit can be configured to measure a frequency of a fifth voltage at the third node and adjust, based on the frequency, a first current configured to bias the comparator.

In another embodiment, a switching regulator can include a first switch, a second switch, a first circuit, a second circuit, a first network, a comparator, and a digital circuit. The first switch can include a first terminal coupled to a first node, a second terminal coupled to a second node, and a third terminal coupled to a third node. The first node can be configured to supply a first voltage, and the second node can be configured to supply an electrical ground. The second switch can be in parallel with the first switch. The first and second circuits can be coupled to control the first and second switches, respectively. The first network can be coupled between the third node and the second node. The first network can include a fourth node configured to supply a second voltage. The comparator can include an input configured to receive a third voltage and a fourth voltage and an output coupled to control the first switch. The fourth voltage can be proportional to the second voltage. The digital circuit can be coupled to the comparator and the third node. The digital circuit can be configured to measure a frequency of a fifth voltage at the third node and control, based on the frequency, the first circuit and the second circuit to configure one or both of the first switch and the second switch to be in a switching state.

### BRIEF DESCRIPTION OF THE DRAWINGS

Fig. 1 is a block diagram depicting a device 100 according to some embodiments.
Fig. 2 is a mixed block and schematic diagram depicting a switching regulator coupled to a load according to some embodiments.
Fig. 3 is a mixed block and schematic diagram depicting an example switch that can be used in some embodiments of a switching regulator.
Fig. 4 is a block diagram depicting an example of a comparator that can be used in some embodiments of a switching regulator.
Fig. 5 is a block diagram depicting a controller in a switching regulator according to some embodiments.
Fig. 6 is a flow diagram depicting a method of controlling a switching regulator according to some embodiments.

### DETAILED DESCRIPTION

A digitally adaptive reconfigurable switching regulator is described. Digitally adaptive may be the ability to adjust parameters of the switching regulator, using a digital circuit, based on the regulator's output to a load circuit. In some embodiments, the switching regulator may be a buck converter. A switching regulator can include a switching component coupled between two nodes, namely, a first node that supplies an input voltage and a second node that supplies an output voltage. A switching regulator can include a control circuit configured to control the switching component, e.g., turning the switching component on and off. The control circuit can use a pulse frequency modulation (PFM) control scheme to control the switching component. PFM may be a control scheme where the switching frequency is varied while the switch on-time remains near constant. The PFM control scheme can be desirable for lower load currents.

In contrast with PFM, the control circuit can use a pulse width modulation (PWM) control scheme to control the switching device. PWM may be a control scheme where the switching frequency is held near constant while the switch on-time is varied. The PWM control scheme can be desirable for higher load currents. A switching regulator can also dynamically switch between PFM and PWM control schemes based on the load current. For example, when load current transitions from a lower current to a higher current, the switching regulator can switch from a PFM control scheme to a PWM control scheme and vice versa. Given a sudden transition in the load current from a lower current to a higher current, however, the transition from PFM to PWM control schemes can cause a transient disturbance on the output voltage supplied to the load circuit. Transient disturbances in the voltage output from a switching regulator can negatively affect its device, as discussed above.

In some embodiments, a switching regulator (e.g., a buck converter) can include a control circuit that uses only a PFM control scheme (e.g., as opposed to a PWM control scheme or dynamic switching between PFM and PWM control schemes). This can reduce complexity and implementation area on an integrated circuit (IC). The PFM control scheme can be beneficial for light load conditions (e.g., lower load current), as discussed further herein. For moderate or heavy load conditions (e.g., higher load currents), the switching regulator can dynamically adjust parameters thereof to maintain the efficacy of the PFM control scheme. Such parameters can include hysteresis in the control circuit, bias current in the control circuit, or the number of active branches in the switching component, or any combination thereof. The parameter adjustment can be performed by a digital circuit as described further herein.

The switching regulator can be used, for example, to supply voltage to a radio in a wireless device, such as a mobile phone, laptop computer, or the like. Modem day wireless communication standards can require higher throughput with lower power consumption limits. Lower power consumption and finer technology nodes of ICs can drive the regulator output voltage lower, which can in turn lower the voltage headroom and make the radio in the wireless device more susceptible to disturbances on the regulator voltage output. The digitally adaptive scheme of the switching regulator described herein can mitigate transient disturbances in the regulator output voltage. This can enable the wireless device to operate reliably at lower supply voltage and with lower voltage headroom, which facilitates the ability to lower the power consumption of the device overall. The embodiments described herein can be used with various buck converter architectures and can be beneficial to any application with a wide load current range and fast settling time requirements on the power supply. Use of a digital circuit for the adaptive parameter control can be portable across IC technology nodes. These and further aspects of the embodiments are described below with respect to the drawings.

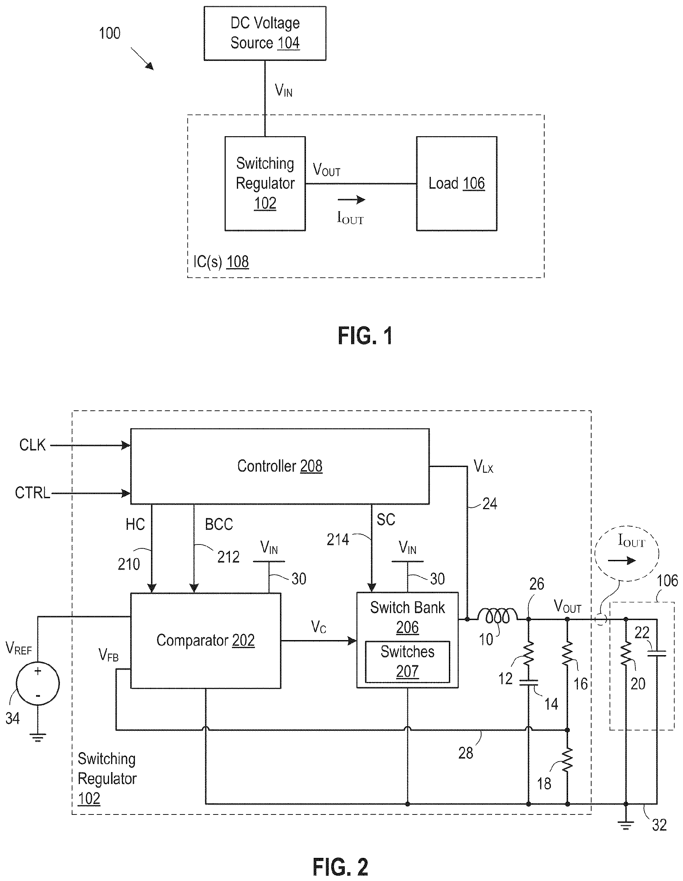

Fig. 1 is a block diagram depicting a device 100 according to some embodiments. Device 100 can include a switching regulator 102, a DC voltage source 104, and a load circuit ("load 106"). A DC voltage source may be a source of DC voltage. For example, DC voltage source can be a battery, a DC-to-DC converter, or an alternating-current (AC)-to-DC converter. A load circuit may be a circuit that can consume power. In particular, load 106 can draw a current (I_{OUT}) from switching regulator 102, which can vary over time. An input of switching regulator 102 can receive a voltage (V_{IN}) from DC voltage source 104. The voltage (V_{IN}) can be a near constant DC voltage. An output of switching regulator 102 can be coupled to load 106. The output of switching regulator 102 can supply a voltage (V_{OUT}) to load 106 and load 106 can consume a current (I_{OUT}) supplied by switching regulator 102. Switching regulator 102 can operate to maintain voltage (V_{OUT}) as a near constant DC voltage over a range of the output current (I_{OUT}) consumed by load 106. In some embodiments, there can be a voltage drop from V_{IN} to V_{OUT} such that switching regulator 102 operates as a step-down converter (e.g., a buck converter).

Load 106 can vary such that the current drawn from switching regulator 102 varies. For example, load 106 can vary among light load, moderate load, and heavy load conditions. A load condition may be a condition of a load circuit in terms of amount of current consumed. The load conditions described herein by way of example are qualitative. Light load can be a condition where load 106 draws an amount of current at or within a range of a minimum amount. Heavy load can be a condition where load 106 draws an amount of current at or within a range of a maximum amount. Moderate load can be a condition where load 106 draws an amount of current in a range between the minimum and maximum amounts. Switching regulator 102 and load 106 can be part of one or more ICs 108. An IC may be a circuit etched onto a semiconductor material. Device 100 can be any of a myriad of devices known in the art, examples of which are described above.

Fig. 2 is a mixed block and schematic diagram depicting switching regulator 102 coupled to load 106 according to some embodiments. Switching regulator 102 can have various nodes. A node may be a point in a circuit where two or more circuit elements are connected. A node can be shown in the drawings as a filled circle at a wire junction. Wires that cross each other without a node or with a jump are not connected. Note that, for ease of illustration, a node may be shown as two or more separate junctions connected by only wire(s) and no circuit elements (e.g., a short-circuit connection). In such case, a reference numeral assigned to the node can be at one of the junctions or at one of the wires between the junctions, all of which collectively represent the node. An electrical network ("network") can be an interconnection of circuit elements or a model of such interconnection. In the example, a network comprising a resistor 20 in parallel with a capacitor 22 can model load 106. Load 106 can be coupled between a node 26 and a node 32. Node 26 can supply a voltage (V_{OUT}) of switching regulator 102. Node 32 can supply a voltage that is a reference for other voltages, which is referred to herein as electrical ground (e.g., 0 V). For example, each voltage described herein can have some value with respect to electrical ground (e.g., measured in volts, millivolts, etc.).

Switching regulator 102 can include a comparator circuit ("comparator 202"), a switch bank 206, and a controller 208. A switch may be a component or a circuit that can be controlled to connect and disconnect conducting path(s) between nodes. A switch bank may be a set of switches. Switch bank 206 can include three terminals and an input for control ("control input"). A terminal of a component can be a point of connection to the component. The first terminal of switch bank 206 can be coupled to a node 30. Node 30 can supply a voltage (V_{IN}) (e.g., the input voltage supplied by DC voltage source 104). The second terminal of switch bank 206 can be coupled to node 32. The third terminal of switch bank 206 can be coupled to a node 24. Node 24 can supply a time-varying DC voltage referred to as the switching voltage (V_{LX}). A switching voltage may be a DC voltage having a periodic variation of amplitude. Switch bank 206 can include switches 207. Switches can be coupled in parallel. Each switch 207 can include three terminals and a control input. The first terminals of switches 207 can be a node comprising the first terminal of switch bank 206. The second terminals of switches 207 can be a node comprising the second terminal of switch bank 206. The third terminals of switches 207 can be a node comprising the third terminal of switch bank 206. The control inputs of switches 207 can comprise the control input of switch bank 206.

Each switch 207 in switch bank 206 can be either active or inactive. A switch that is active in this context (an "active switch") may be a switch capable of being controlled on and off. An active switch can be said to be in a switching state, which allows the switch to be controlled between an on state and an off state. A switch that is inactive in this context (an "inactive switch") may be a switch in a static condition. An inactive switch can be said to be in a non-switching state. The non-switching state may be a static state, such as an off state or a high-impedance state. When a switch 207 is controlled to be on (e.g., in an on state), the switch can provide a conducting path between node 30 and node 24. When a switch 207 is controlled to be on, current can flow from node 30 through inductor 10 to the branches coupled to node 26. When a switch 207 is controlled to be off (e.g., in an off state), the switch can provide a conducting path between node 24 and node 32. When a switch 207 is controlled to be off, some energy stored by the magnetic field of inductor 10 can be released as current to the branches coupled to inductor 10. As discussed below, controller 208 can set some number greater than zero of switches 207 to be active (e.g., in the switching state). The remainder of switches 207 (if any) can be set to be inactive (e.g., in the non-switching state). Inactive switches can be in a static condition, such as off or high impedance. A switch that is in a high-impedance state can disconnect both node 30 and node 32 from node 24.

Switching regulator 102 can include an inductor 10 coupled between node 24 and node 26. Switching regulator 102 can include a series combination of a resistor 12 and a capacitor 14 coupled between node 26 and node 32. Resistor 12 can be a component or a model of parasitic resistance. Inductor 10, resistor 12, and capacitor 14 can be a first network of switching regulator 102 coupled between node 24 and node 32. The first network can include the node 26 that supplies the output voltage (V_{OUT}) to load 106. As the active switches in switch bank 206 are turned on and off, the current through inductor 10 can ramp up and down. Capacitor 14 can filter the output voltage (V_{OUT}) and smooth the ripple caused by the ramping up and down of current through inductor 10. Switching regulator 102 can supply a near constant DC voltage as V_{OUT} to load 106 over a range of current I_{OUT}.

Comparator 202 can receive as input a reference voltage (V_{REF}) and a feedback voltage (V_{FB}). Feedback in a circuit may be when output is routed back as input. A feedback voltage may be a voltage at an output that is routed back to be voltage at an input. The feedback voltage (V_{FB}) can be proportional to V_{OUT}, e.g., V_{FB} can be V_{OUT} or some fraction of V_{OUT}. In some embodiments, switching regulator 102 can include a second network coupled between node 26 and node 32 that provides the feedback voltage (V_{FB}) as a fraction of the output voltage (V_{OUT}). In the example, such a network can include a resistor 16 coupled between node 26 and a node 28, and a resistor 18 coupled between node 28 and node 32. Node 28 can supply the feedback voltage (V_{FB}). Resistors 16 and 18 can form a voltage divider to make the feedback voltage (V_{FB}) a fraction of the output voltage (Vour). In other embodiments, the second network can be omitted and the feedback voltage (V_{FB}) can be the same as the output voltage (V_{OUT}). The reference voltage (V_{REF}) can be supplied by a DC voltage source 34. A DC voltage source may be a circuit that outputs a DC voltage independent of its load and supplies current within a range. DC voltage source 34 can be, for example, a DC voltage reference, such as a bandgap voltage reference or the like known in the art.

Comparator 202 can be configured to compare its input voltages (V_{REF} and V_{FB}) and generate an output voltage (V_{C}) based on the comparison. The current (I_{OUT}) drawn by load 106, and current supplied by the input voltage source, can work to fluctuate the amplitude of the output voltage (V_{OUT}). Switching regulator 102, through operation of comparator 202, can employ a PFM control scheme to mitigate these output voltage fluctuations such that the output voltage (V_{OUT}) remains near constant. In the PFM control scheme, when the feedback voltage (V_{FB}) becomes less than the reference voltage (V_{REF}) by some threshold amount, comparator 202 can change its output voltage (V_{C}) to a level that causes active switches to be in the on state. This voltage level can be referred to as v_on (e.g., a level of v_on volts). When the feedback voltage (V_{FB}) becomes more than the reference voltage (V_{REF}) by some threshold amount, comparator 202 can change its output voltage (Vc) to a level that causes active switches to be in the off state. This voltage level can be referred to as v_off (e.g., a level of v_off volts). Comparator 202 can implement hysteresis through the thresholds. That is, comparator 202 can latch the output voltage (Vc) to one of the two levels (v_on or v_off). The output voltage (Vc) can stay at the v_off level until the difference between the reference voltage (V_{REF}) and the feedback voltage (V_{FB}) becomes more than a threshold voltage (referred to as v_low volts). The output voltage (Vc) can stay at the v_on level until the difference between the feedback voltage (V_{FB}) and the reference voltage (V_{REF}) becomes more than a threshold voltage (referred to as v_high volts). The difference between the v_high and v_low voltage levels can be referred to as Δv_hys ("hysteresis range"). The hysteresis range Δv_hys can be centered around the reference voltage (V_{REF}). As discussed below, the hysteresis range of comparator 202 can be programmable and controlled by controller 208.

The comparator output voltage (V_{C}) can be supplied to the control inputs of switches 207. Active ones of switches 207 can thus be turned on and off according to the comparator output voltage (V_{C}). Inactive ones of switches 207 can ignore the comparator output voltage and remain in the non-switching state.

Comparator 202 can include an active circuit. An active circuit may be a circuit that can increase the power of a signal (e.g., increase voltage level, current level, or both) using a power source. An active circuit can be biased by the power source. Biasing may be setting the operating conditions of the active circuit (e.g., currents in branches of the active circuit, voltages at nodes of the active circuit). The power source can supply a current to the active circuit for biasing ("bias current"). Comparator 202 can be coupled between nodes 30 and 32 and can draw a bias current from DC voltage source 104. In some embodiments, the bias current drawn by comparator 202 can be programmable.

Controller 208 can include an input to receive a clock signal (CLK), an input to receive a control signal (CTRL), an input to receive the voltage (V_{LX}) on node 24, and outputs 210, 212, and 214 to provide control signals (HC), (BCC), and (SC), respectively. As discussed further below, controller 208 can measure the frequency of the fluctuations in the switching voltage (V_{LX}). Based on these frequency measurements, controller 208 can manipulate control signals (HC), (BCC), and (SC). Comparator 202 can be coupled to outputs 210 and 212 of controller 208 to receive the control signals (HC) and (BCC), respectively. Switch bank 206 can be coupled to output 214 of controller 208 to receive the control signal (SC). The control signal (HC) can control the hysteresis of comparator 202 by setting the hysteresis range (Δv_hys). The control signal (BCC) can control the bias current drawn by comparator 202 by setting its current level. The control signal (SC) can control the number of switches 207 that are active (e.g., in the switching state).

At least a portion of controller 208 can be implemented using a digital circuit. A digital circuit may be a circuit that operates on digital signals. A digital signal may be a signal of quantized magnitudes at discrete times. The quantized magnitudes can be represented by numbers having a finite number of digits and thus a digital signal may be a sequence of such numbers each representing signal magnitude at an instant of time. In contrast, an analog signal may be a signal having a magnitude that can take on any value over a continuous range of values. The voltages and currents described above are analog signals. A digital circuit can include, for example, various logic gates (e.g., AND, OR, NAND, NOR, XOR) and circuits formed from arrangements of logic gates (e.g., latches, flip-flops, counters, lookup tables, memories, state machines, etc.). Portions of the digital circuit of controller 208 can operate according to clock signal (CLK) (e.g., synchronous digital circuits).

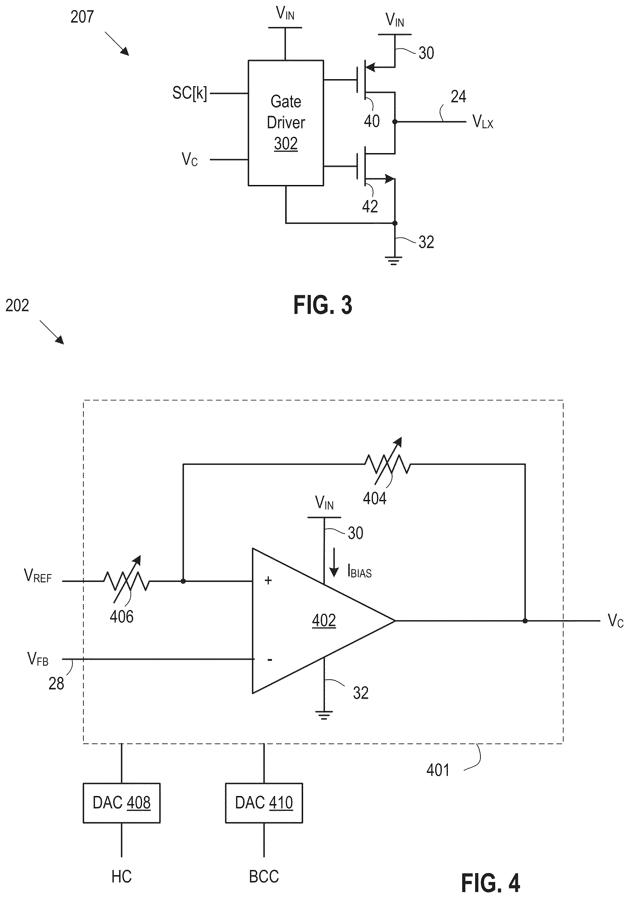

Fig. 3 is a mixed block and schematic diagram depicting an example of a switch 207 that can be used in some embodiments of switching regulator 102. Switch 207 can include transistors. In some embodiments, the transistors can be field effect transistors (FETs). A FET can be a four-terminal device having gate, source, drain, and substrate terminals. Unless otherwise indicated, the transistors described herein have their substrate terminals coupled to their source terminals and, as such, the substrate terminals are not explicitly shown. FETs can be p-channel FETs or n-channel FETs, where n and p refer to the type of doping in the semiconductor material and the type of majority charge carrier, as is known in the art. Consistent with convention, any n-channel transistors are shown schematically with the source as an arrow facing away from the gate and any p-channel transistors are shown schematically with the source as an arrow facing towards the gate. There are many types of FETs known in the art. One skilled in the art can select among one or more such FETs based on the description of the examples and embodiments herein. Metal-oxide semiconductor field-effect transistors (MOSFETs) are widely used and well-known FETs in ICs. P-channel MOSFETs can be referred to as PMOS transistors and N-channel MOSFETs can be referred to as NMOS transistors. Accordingly, for purposes of clarity, various examples and embodiments are described below within the context of NMOS transistors, PMOS transistors, or a combination thereof.

Switch 207 can include a transistor 40 and a transistor 42. Transistor 40 can be a PMOS transistor and transistor 42 can be an NMOS transistor. The source of transistor 40 can be coupled to node 30 to receive the input voltage (V_{IN}). The drain of transistor 40 can be coupled to node 24. The drain of transistor 42 can be coupled to node 24. The source of transistor 42 can be coupled to node 32 (electrical ground). Switch 207 can include a gate driver 302. A gate driver may be a circuit configured to supply gate voltage(s) to transistor(s) in response to an input. The gates of transistors 40 and 42 can be coupled to the output of gate driver 302. An input of gate driver 302 can be coupled to receive the comparator output voltage (V_{C}) and bit(s) of the control signal (SC). Assume in the example that the control signal (SC) includes some number of bits and that gate driver 302 of switch 207 receives a kth bit of the control signal (SC) (designated SC[k]).

In operation, the control signal SC[k] can control gate driver to configure switch 207 to be either active or inactive (e.g., in the switching state or the non-switching state). In case switch 207 is controlled active, gate driver 302 controls the switch on and off based on pulses in the comparator output voltage (Vc). When the comparator output voltage (Vc) is at a voltage level of v_on: (1) gate driver 302 can supply a gate voltage to transistor 40 that turns transistor 40 on, providing a conducting path between node 30 and 24 through transistor 40; and (2) gate driver 302 can supply a gate voltage to transistor 42 that turns the transistor 42 off, disconnecting nodes 24 and 32. When the comparator output voltage (V_{C}) is at a voltage level of v_off: (1) gate driver 302 can supply a gate voltage to transistor 40 that turns transistor 40 off, disconnecting nodes 30 and 24; and (2) gate driver 302 can supply a gate voltage to transistor 42 that turns transistor 42 on, providing a conducting path between nodes 24 and 32. In case switch 207 is controlled inactive, gate driver 302 controls the switch to be in a static condition, e.g., off or high impedance. For high impedance, gate driver 302 can supply gate voltages such that neither transistor 40 nor 42 is on.

In some embodiments, gate driver 302 can be configured to apply the gate voltages to the gates in a manner that prevents a short circuit between nodes 30 and 32 through both transistors 40 and 42 being in an on state. Gate driver 302 can ensure that only one of transistors 40 and 42 is on and providing a current path at any given time.

Fig. 4 is a block diagram depicting an example of comparator 202 that can be used in some embodiments of switching regulator 102. Comparator 202 can include an active circuit 401. Active circuit 401 can include a voltage amplifier 402, a programmable resistor 404, and a programmable resistor 406. A voltage amplifier may be a circuit that can increase the magnitude of an input voltage using a power supply. A programmable resistor may be a resistor having a variable resistance that can be selected by a control input. Voltage amplifier 402 can include a pair of inputs, comprising a non-inverting terminal and an inverting terminal, and an output terminal. Voltage amplifier 402 can include power supply terminals coupled to nodes 30 and 32. The output terminal of voltage amplifier 402 can supply the comparator output voltage (V_{C}). Programmable resistor 404 can be coupled between the output and non-inverting terminals of voltage amplifier 402. The reference voltage (V_{REF}) can be supplied to the non-inverting terminal of voltage amplifier 402 through programmable resistor 406. The inverting terminal of voltage amplifier 402 can be coupled to node 28 to receive the feedback voltage (V_{FB}). Voltage amplifier 402 can be an operational amplifier or the like.

In some embodiments, switching regulator 102 can include digital-to-analog converters (DACs) 408 and 410. A DAC may be a circuit that can convert a digital input to an analog output. DAC 408 can receive the control signal (HC) from controller 208. DAC 408 can convert a digital value of control signal (HC) into analog output to control hysteresis of comparator 202. The hysteresis range (Δv_hys) can be (v_max - v_min) * (R_406 / (R_406 + R_404)), where v_max is one of v_on or v_off, v_min is the other of v_on or v_off, R_406 is the resistance of programmable resistor 406 (e.g., in ohms), and R_404 is the resistance of programmable resistor 404. Thus, controller 208 can set the hysteresis range of comparator 202 by controlling the resistances of programmable resistors 404 and 406. DAC 408 can supply an analog output to control programmable resistors 404 and 406. DAC 410 can convert a digital value of control signal (BCC) into an analog output to control comparator bias current (I_{BIAS}). DAC 410 can supply an analog output to control current source(s) in voltage amplifier 402.

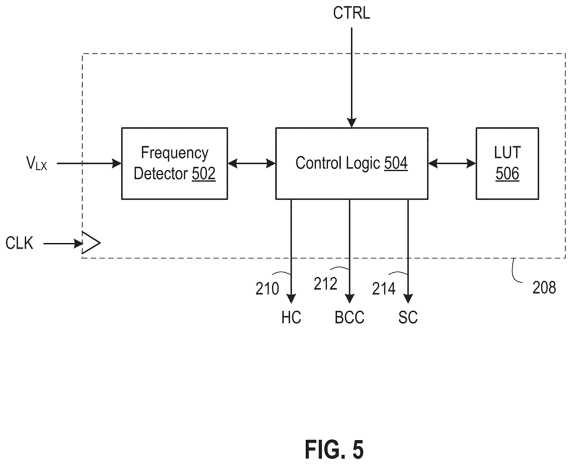

Fig. 5 is a block diagram depicting controller 208 according to some embodiments. Controller 208 can include a frequency detector 502, control logic 504, and a lookup table (LUT) 506. A frequency detector may be a circuit that can measure frequency of an input signal. Frequency detector 502 can measure frequency of the switching voltage (V_{LX}). A LUT may be a circuit that can supply data values associated with input keys. LUT 506 can store data sets for control signals (HC), (BCC), and (SC). The data sets can be associated with load conditions, for example. There can be one set of data for a light load condition; another set of data for a moderate load condition; and another set of data for a heavy load condition. The number of load conditions and their designation are just one example and, in general, LUT 506 can store any number of data sets for any number of load conditions. While LUT 506 is described in the example, in general, controller 208 can include a memory configured to store the data sets for the load conditions. A memory may be a circuit that can store data.

Control logic 504 can supply addresses (keys) to LUT 506 to obtain a set of data for a selected load condition. Control logic may be a circuit that can implement control of other components. Control logic 504 can read a measure of frequency from frequency detector 502. Control logic 504 can select, based on the measured frequency, a load condition from a set of possible load conditions. Control logic 504, based on the selected load condition, can supply addresses to LUT 506 to read a set of data for that load condition. Control logic 504 can output the data using bits of the corresponding control signals (HC), (BCC), and (SC). Frequency detector 502, control logic 504, and LUT 506 can be implemented using digital circuits. Synchronous components of the digital circuits can operate based on the clock signal (CLK). Control logic 504 can be responsive to the control signal (CTRL) for performing its operations on demand, for example.

Referring to Figs. 2-5, switching regulator 102 can operate as follows. Assume during some time period load 106 consumes a current (I_{OUT}) at some constant current level. Based on the operation of the components described above, comparator 202 can supply output voltage (V_{C}) that has a sequence of pulses. Each pulse holds the voltage level v_on for some time. The voltage level can be v_off between the pulses. For a selected load condition (by controller 208), the duty cycle of time v_on to time v_off can be constant or near constant. The frequency of the pulses in the comparator output voltage (V_{C}), and hence the frequency of switching, can depend on the level of the current (I_{OUT}) consumed by load 106. An increase in current level of the current (I_{OUT}) can result in an increase in the switching frequency. A decrease in the current level of current (I_{OUT}) can result in a decrease in the switching frequency. A large enough increase or decrease in the current level of the current (I_{OUT}) can result in controller 208 selecting a new load condition. The duty cycle of the comparator output voltage (V_{C}) can change, but remain near constant for the new load condition.

Controller 208 can measure the frequency of the switching voltage (V_{LX}). The frequency of the switching voltage (V_{LX}) can be proportional to the current level of the current (I_{OUT}) drawn by load 106. The higher the current level of the current (I_{OUT}), the higher the frequency of the switching voltage (V_{LX}) and vice versa. Based on a measured frequency of the switching voltage (V_{LX}), controller 208 can select a load condition from a set of load conditions (e.g., light, moderate, and heavy load conditions). Controller 208 can set the control signals (HC), (BCC), and (SC) using a set of control data for the identified load condition. The control signal (HC) can set the hysteresis thresholds of comparator 202. Control signal (BCC) can set the comparator bias current level. Control signal (SC) can set the number of active switches in switch bank 206. A large change in the level of the current (I_{OUT}) consumed by load 106 can result in a change in load condition. To compensate, controller 208, based on the measured frequency of the switching voltage (V_{LX}), can select the new load condition and can set the control signals (HC), (BCC), and (SC) using a new set of control data for the new load condition.

Consider the hysteresis range of comparator 202. If the hysteresis range is wider, the level of the output voltage (V_{C}) can change less frequently. The active switches can switch on and off less frequently. Switching regulator 102 can be less responsive to changes in output voltage (V_{OUT}). This condition can be appropriate for lower levels of the output current (I_{OUT}) and can save power in switching regulator 102. If the hysteresis range is narrower, the level of the output voltage (V_{C}) can change more frequently. The active switches can switch on more frequently. Switching regulator 102 can be more responsive to changes in output voltage (V_{OUT}). This condition can consume more power, but also be more appropriate for higher levels of the output current (I_{OUT}). Thus, controller 208 can be programmed with different hysteresis ranges for different ranges of the output current (I_{OUT}) (e.g., different load conditions, such as light, moderate, and heavy). The different hysteresis ranges can be set based on the output current range and can balance responsiveness versus power consumption for that current range.

Consider the comparator bias current. Lower bias current levels can result in comparator 202 being less responsive to changes in the feedback voltage and higher bias current levels can result in comparator 202 being more responsive to changes in the feedback voltage. Lower bias current levels can be appropriate for lower levels of the output current and can save power in switching regulator 102. Higher bias current levels can be appropriate for higher levels of the output current. Thus, controller 208 can be programmed with different comparator bias current levels for different ranges of the output current (I_{OUT}) (e.g., different load conditions, such as light, moderate, and heavy). The comparator bias current levels can be set based on the output current range and can balance responsiveness versus power consumption for that current range.

Consider the number of switches in the switching state. Less switches in the switching state can result in less current supplied to inductor 10 during the on state for those active switches. More switches in the switching state can result in more current supplied to inductor 10 during the on state for those active switches. Less switches in the switching state can be appropriate for lower output current levels and can save power in switching regulator 102. More switches in the switching state can be appropriate for higher output current levels and can make switching regulator 102 more responsive. Thus, controller 208 can be programmed with different numbers of active switches for different ranges of the output current (I_{OUT}) (e.g., different load conditions, such as light, moderate, and heavy). The different numbers of active switches can be set based on the output current range and can balance responsiveness versus power consumption for that current range.

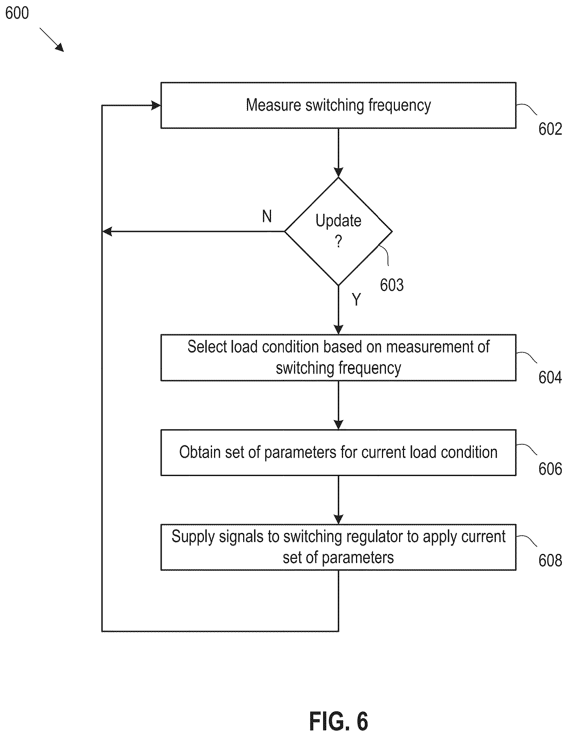

Fig. 6 is a flow diagram depicting a method 600 of controlling a switching regulator according to some embodiments. Method 600 can be performed by control logic 504 in controller 208 (e.g., using a state machine implementation of control logic 504). Method 600 can begin at step 602, where controller 208 can measure the switching frequency. For example, frequency detector 502 can determine a measure of frequency for the switching voltage (V_{LX}). Control logic 504 can obtain a measure of frequency from frequency detector 502. At step 603, control logic 504 can determine if there is an update to the current load condition. If not, method 600 can return to step 602. Otherwise, method 600 can proceed to step 604. At step 604, controller 208 can select a load condition based on the measured frequency. Control logic 504 can select a load condition from a plurality of defined load conditions based on the measured frequency. At step 606, controller 208 can obtain a set of parameters for the current load condition. Control logic 504 can read a data set from LUT 506 that corresponds to the selected load condition.

At step 608, controller 208 can supply signals to switching regulator 102 to apply the current set of parameters. Control logic 504 can configure the control signals (HC), (BCC), and (SC) based on the data set obtained from LUT 506 for the selected load condition. Switching regulator 102 can then set the parameters based on the control signals (e.g., hysteresis, comparator bias current, number of active switches). In some embodiments, controller 208 can control any one of or any combination of those parameters. For example, controller 208 can control the hysteresis range. Controller 208 can control the hysteresis range in combination with the comparator bias current. Controller 208 can control the hysteresis range in combination with both the comparator bias current and the number of active switches. Controller 208 can control the comparator bias current. Controller 208 can control the comparator bias current in combination with the number of active switches. Controller 208 can control the number of active switches. Method 600 can return to step 602 from step 608.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

As used herein, the term "couple" or "connect" and its derivatives include: (a) electrical and communicative coupling or connecting; and (b) do not imply a direct coupling or connection, but rather may include intervening elements, unless described as "directly coupled" or "directly connected."

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or a component. Similarly, structures and functionalities presented as a single component may be implemented as separate components. These and other variations, additions, and improvements may fall within the scope of the appended claims.

The invention also comprises the following numbered embodiments forming part of the description:
1. A switching regulator, comprising:
   a first switch including a first terminal coupled to a first node, a second terminal coupled to a second node, and a third terminal coupled to a third node, the first node configured to supply a first voltage, the second node configured to supply an electrical ground;
   a first network coupled between the third node and the second node, the first network including a fourth node configured to supply a second voltage;
   a comparator having an input configured to receive a third voltage and a fourth voltage and an output coupled to control the first switch, the fourth voltage being proportional to the second voltage; and
   a digital circuit coupled to the comparator and the third node, the digital circuit configured to: measure a frequency of a fifth voltage at the third node; and adjust a hysteresis range of the comparator based on the frequency.
2. The switching regulator of embodiment 1, wherein the digital circuit is configured to adjust, based on the frequency, a current configured to bias the comparator.
3. The switching regulator of embodiment 1, further comprising:
   a second switch in parallel with the first switch;
   a first circuit coupled between the output of the comparator and the first switch; and
   a second circuit coupled between the output of the comparator and the second switch; and
   wherein the digital circuit is configured to control, based on the frequency, the first circuit and the second circuit to configure one or both of the first switch and the second switch to be in a switching state.
4. The switching regulator of embodiment 3, wherein the digital circuit is configured to control, based on the frequency, the first circuit and the second circuit to configure one of the first switch or the second switch to be in the switching state and another of the first switch or the second switch to be in a non-switching state.
5. The switching regulator of embodiment 1, wherein the digital circuit comprises a frequency detector configured to measure the frequency of the fifth voltage.
6. The switching regulator of embodiment 5, wherein the first network includes an inductor coupled between the third node and the fourth node and a capacitor coupled between the fourth node and the second node.
7. The switching regulator of embodiment 5, wherein the digital circuit comprises:
   a memory configured to store hysteresis ranges corresponding to conditions of a current supplied to a load coupled to the fourth node; and
   control logic configured to: obtain a measurement of the frequency of the fifth voltage from the frequency detector; read a first hysteresis range from the memory in response to the measurement; and supply a signal to the comparator to adjust the hysteresis range of the comparator to the first hysteresis range.
8. A switching regulator, comprising:
   a first switch including a first terminal coupled to a first node, a second terminal coupled to a second node, and a third terminal coupled to a third node, the first node configured to supply a first voltage, the second node configured to supply an electrical ground;
   a first network coupled between the third node and the second node, the first network including a fourth node configured to supply a second voltage;
   a comparator having an input configured to receive a third voltage and a fourth voltage and an output coupled to control the first switch, the fourth voltage being proportional to the second voltage; and
   a digital circuit coupled to the comparator and the third node, the digital circuit configured to: measure a frequency of a fifth voltage at the third node; and adjust, based on the frequency, a first current configured to bias the comparator.
9. The switching regulator of embodiment 8, further comprising:
   a second switch in parallel with the first switch;
   a first circuit coupled between the output of the comparator and the first switch; and
   a second circuit coupled between the output of the comparator and the second switch; and
   wherein the digital circuit is configured to control, based on the frequency, the first circuit and the second circuit to configure one or both of the first switch and the second switch to be in a switching state.
10. The switching regulator of embodiment 9, wherein the digital circuit is configured to control, based on the frequency, the first circuit and the second circuit to configure one of the first switch or the second switch to be in the switching state and another of the first switch or the second switch to be in a non-switching state.
11. The switching regulator of embodiment 8, wherein the digital circuit comprises a frequency detector configured to measure the frequency of the fifth voltage.
12. The switching regulator of embodiment 11, wherein the first network comprises an inductor coupled between the third node and the fourth node and a capacitor coupled between the fourth node and the second node.
13. The switching regulator of embodiment 11, wherein the digital circuit comprises:
   a memory configured to store current levels corresponding to conditions of a second current supplied to a load coupled to the fourth node; and
   control logic configured to: obtain a measurement of the frequency of the fifth voltage from the frequency detector; read a first current level from the memory in response to the measurement; and supply a signal to the comparator to adjust the first current to the first current level.
14. The switching regulator of embodiment 8, wherein the comparator includes a current source configured to bias an amplifier with the first current.
15. A switching regulator, comprising:
   a first switch including a first terminal coupled to a first node, a second terminal coupled to a second node, and a third terminal coupled to a third node, the first node configured to supply a first voltage, the second node configured to supply an electrical ground;
   a second switch in parallel with the first switch;
   a first circuit and a second circuit configured to control the first switch and the second switch, respectively;
   a first network coupled between the third node and the second node, the first network including a fourth node configured to supply a second voltage;
   a comparator having an input configured to receive a third voltage and a fourth voltage and an output coupled to the first circuit and the second circuit, the fourth voltage being proportional to the second voltage; and
   a digital circuit coupled to the comparator and the third node, the digital circuit configured to: measure a frequency of a fifth voltage at the third node; and control, based on the frequency, the first circuit and the second circuit to configure one or both of the first switch and the second switch to be in a switching state.
16. The switching regulator of embodiment 15, wherein the digital circuit is configured to control, based on the frequency, the first circuit and the second circuit to configure one of the first switch or the second switch to be in the switching state and another of the first switch or the second switch to be in a non-switching state.
17. The switching regulator of embodiment 16, wherein the switching state is an alternation between an on state and an off state based on the output of the comparator, and wherein the non-switching state is a high impedance state or the off state.
18. The switching regulator of embodiment 15, wherein the digital circuit comprises a frequency detector configured to measure the frequency of the fifth voltage.
19. The switching regulator of embodiment 18, wherein the first network includes an inductor coupled between the third node and the fourth node and a capacitor coupled between the fourth node and the second node.
20. The switching regulator of embodiment 18, wherein the digital circuit comprises:
   a memory configured to store a number of switches in the switching state corresponding to each condition of a current supplied to a load coupled to the fourth node in a set of conditions; and
   control logic configured to: obtain a measurement of the frequency of the fifth voltage from the frequency detector; read a first number of switches in the switching state from the memory in response to the measurement; and supply a signal to the first circuit and the second circuit to configure state of the first switch and the second switch based on the first number.

## Claims

1. A switching regulator, comprising:
a first switch including a first terminal coupled to a first node, a second terminal coupled to a second node, and a third terminal coupled to a third node, the first node configured to supply a first voltage, the second node configured to supply an electrical ground;
a first network coupled between the third node and the second node, the first network including a fourth node configured to supply a second voltage;
a comparator having an input configured to receive a third voltage and a fourth voltage and an output coupled to control the first switch, the fourth voltage being proportional to the second voltage; and
a digital circuit coupled to the comparator and the third node, the digital circuit configured to: measure a frequency of a fifth voltage at the third node; and adjust a hysteresis range of the comparator based on the frequency.

2. The switching regulator of claim 1, wherein the digital circuit is configured to adjust, based on the frequency, a current configured to bias the comparator.

3. The switching regulator of claim 1 or claim 2, further comprising:
a second switch in parallel with the first switch;
a first circuit coupled between the output of the comparator and the first switch; and
a second circuit coupled between the output of the comparator and the second switch; and
wherein the digital circuit is configured to control, based on the frequency, the first circuit and the second circuit to configure one or both of the first switch and the second switch to be in a switching state,
in particular wherein the digital circuit is configured to control, based on the frequency, the first circuit and the second circuit to configure one of the first switch or the second switch to be in the switching state and another of the first switch or the second switch to be in a non-switching state.

4. The switching regulator of one of claims 1 to 3, wherein the digital circuit comprises a frequency detector configured to measure the frequency of the fifth voltage, and/or wherein the first network includes an inductor coupled between the third node and the fourth node and a capacitor coupled between the fourth node and the second node.

5. The switching regulator of claim 4, wherein the digital circuit comprises:
a memory configured to store hysteresis ranges corresponding to conditions of a current supplied to a load coupled to the fourth node; and
control logic configured to: obtain a measurement of the frequency of the fifth voltage from the frequency detector; read a first hysteresis range from the memory in response to the measurement; and supply a signal to the comparator to adjust the hysteresis range of the comparator to the first hysteresis range.

6. A switching regulator, comprising:
a first switch including a first terminal coupled to a first node, a second terminal coupled to a second node, and a third terminal coupled to a third node, the first node configured to supply a first voltage, the second node configured to supply an electrical ground;
a first network coupled between the third node and the second node, the first network including a fourth node configured to supply a second voltage;
a comparator having an input configured to receive a third voltage and a fourth voltage and an output coupled to control the first switch, the fourth voltage being proportional to the second voltage; and
a digital circuit coupled to the comparator and the third node, the digital circuit configured to: measure a frequency of a fifth voltage at the third node; and adjust, based on the frequency, a first current configured to bias the comparator.

7. The switching regulator of claim 6, further comprising:
a second switch in parallel with the first switch;
a first circuit coupled between the output of the comparator and the first switch; and
a second circuit coupled between the output of the comparator and the second switch; and
wherein the digital circuit is configured to control, based on the frequency, the first circuit and the second circuit to configure one or both of the first switch and the second switch to be in a switching state, in particular, wherein the digital circuit is configured to control, based on the frequency, the first circuit and the second circuit to configure one of the first switch or the second switch to be in the switching state and another of the first switch or the second switch to be in a non-switching state.

8. The switching regulator of claim 6 or claim 7, wherein the digital circuit comprises a frequency detector configured to measure the frequency of the fifth voltage.

9. The switching regulator of one of claims 6 to 8, wherein the first network comprises an inductor coupled between the third node and the fourth node and a capacitor coupled between the fourth node and the second node, and/or wherein the digital circuit comprises:
a memory configured to store current levels corresponding to conditions of a second current supplied to a load coupled to the fourth node; and
control logic configured to: obtain a measurement of the frequency of the fifth voltage from the frequency detector; read a first current level from the memory in response to the measurement; and supply a signal to the comparator to adjust the first current to the first current level.

10. The switching regulator of one of claims 6 to 9, wherein the comparator includes a current source configured to bias an amplifier with the first current.

11. A switching regulator, comprising:
a first switch including a first terminal coupled to a first node, a second terminal coupled to a second node, and a third terminal coupled to a third node, the first node configured to supply a first voltage, the second node configured to supply an electrical ground;
a second switch in parallel with the first switch;
a first circuit and a second circuit configured to control the first switch and the second switch, respectively;
a first network coupled between the third node and the second node, the first network including a fourth node configured to supply a second voltage;
a comparator having an input configured to receive a third voltage and a fourth voltage and an output coupled to the first circuit and the second circuit, the fourth voltage being proportional to the second voltage; and
a digital circuit coupled to the comparator and the third node, the digital circuit configured to: measure a frequency of a fifth voltage at the third node; and control, based on the frequency, the first circuit and the second circuit to configure one or both of the first switch and the second switch to be in a switching state.

12. The switching regulator of claim 11, wherein the digital circuit is configured to control, based on the frequency, the first circuit and the second circuit to configure one of the first switch or the second switch to be in the switching state and another of the first switch or the second switch to be in a non-switching state, and/or wherein the switching state is an alternation between an on state and an off state based on the output of the comparator, and wherein the non-switching state is a high impedance state or the off state.

13. The switching regulator of claim 11 or claim 12, wherein the digital circuit comprises a frequency detector configured to measure the frequency of the fifth voltage.

14. The switching regulator of one of claims 11 to 13, wherein the first network includes an inductor coupled between the third node and the fourth node and a capacitor coupled between the fourth node and the second node.

15. The switching regulator of one of claims 13 to 14, wherein the digital circuit comprises:
a memory configured to store a number of switches in the switching state corresponding to each condition of a current supplied to a load coupled to the fourth node in a set of conditions; and
control logic configured to: obtain a measurement of the frequency of the fifth voltage from the frequency detector; read a first number of switches in the switching state from the memory in response to the measurement; and supply a signal to the first circuit and the second circuit to configure state of the first switch and the second switch based on the first number.
